# EUROPÄISCHE PATENTANMELDUNG

(11) **EP 4 516 574 A2**
(43) Veröffentlichungstag der Anmeldung: **05.03.2025**
(21) Anmeldenummer: 24187329.8
(22) Anmeldetag: 09.07.2024
(51) Int. Cl.: B60L 53/16, B60L 53/18, B60L 53/30, B60L 53/302, B60L 53/31, B60L 53/35

(54) **LADEVORRICHTUNG ZUM LADEN EINES ELEKTROFAHRZEUGS**

(30) Priorität: 31.08.2023 DE 102023208393
(71) Anmelder: Siemens Aktiengesellschaft, 80333 München (DE)
(72) Erfinder: Kummeth, Peter, 91074 Herzogenaurach (DE); Perras, Stefan, 82223 Eichenau (DE); Richter, Johannes, 90768 Fürth (DE)
(74) Vertreter: Siemens Patent Attorneys

(57) **Zusammenfassung**

Die Erfindung betrifft eine Ladevorrichtung (2, 2') zum Laden eines Elektrofahrzeugs (1) mit elektrischer Energie mittels eines Ladekabels (15, 26), welches mit einem Ladeanschluss (5) an dem zu ladenden Elektrofahrzeug (1) verbindbar ist. Die Ladevorrichtung (2, 2') ist gekennzeichnet durch eine Schleppkettenanordnung (4), die eingerichtet ist, einen Satz (3) von Kabeln flexibel in Richtung eines Ladeanschlusses (5) in mindestens eine Raumrichtung (7.1 bis 7.3) zu transportieren und in Bezug auf den Ladeanschluss (5) des Elektrofahrzeugs (1) auszurichten.

## Beschreibung

Die Erfindung betrifft eine Ladevorrichtung zum Laden eines Elektrofahrzeugs mit elektrischer Energie mittels eines Ladekabels, welches mit dem zu ladenden Elektrofahrzeug verbindbar ist.

Elektrofahrzeuge (auch elektrisch betriebene Fahrzeuge genannt) ersetzen in zunehmendem Maße Kraftfahrzeuge mit Verbrennungsmotoren. Es ist zu erwarten, dass in Zukunft nicht nur die Zahl elektrischer Fahrzeuge mit Fahrer, sondern auch die Anzahl autonom fahrender elektrischer Fahrzeuge zunimmt. Erste Anwendungsfälle werden beispielsweise autonom fahrende Taxi- und Shuttle-Fahrzeuge sein. Die Auslastung dieser autonomen Fahrzeuge ist ein entscheidender Faktor für die Profitabilität der Dienste, so dass Stillstandzeiten durch Aufladen möglichst minimiert werden müssen. Dies erfolgt durch entsprechende Schnellladestationen mit Gleichstrom oder optional Wechselstrom. Da sich unter Umständen kein Fahrer mehr in den autonomen Fahrzeugen befindet, der den Ladevorgang manuell durchführen kann, wie Einstecken und Ausstecken des Ladekabels, bedarf es einer autonomen Schnellladevorrichtung.

Der Erfindung liegt die Aufgabe zugrunde, zum Laden eines, insbesondere autonom fahrenden, Elektrofahrzeugs eine verbesserte Ladevorrichtung bereitzustellen.

Die Aufgabe wird erfindungsgemäß mit einer Ladevorrichtung mit den Merkmalen des Anspruchs 1 gelöst.

Vorteilhafte Ausgestaltungen der Erfindung sind Gegenstand der Unteransprüche.

Die erfindungsgemäße Ladevorrichtung zum Laden eines Elektrofahrzeugs mit elektrischer Energie mittels eines Ladekabels, welches mit einem Ladeanschluss an dem zu ladenden Elektrofahrzeug verbindbar ist, ist gekennzeichnet durch eine Schleppkettenanordnung, die eingerichtet ist, ein Satz von Kabeln, insbesondere mindestens ein Ladeübertragungskabel und/oder das Ladekabel, flexibel in Richtung des Ladeanschlusses in mindestens einer Raumrichtung (auch Transportierrichtung genannt) zu bewegen oder zu transportieren und in Bezug auf den Ladeanschluss des Elektrofahrzeugs auszurichten.

Durch eine solche Ladevorrichtung kann der Satz von Kabeln, insbesondere das Ladeübertragungskabel und/oder das Ladekabel mit einem Ladestecker, flexibel in die mindestens eine Raumrichtung, insbesondere eine Längsrichtung über eine entsprechende Länge oder eine entsprechende Strecke hinweg bis zu dem Ladeanschluss bewegt oder transportiert werden.

Unter einer Ladevorrichtung wird insbesondere eine autonome Ladevorrichtung oder eine autonome Ladestation, zum Beispiel eine Schnellladestation, verstanden. Die Ladestation kann einerseits mit einem Stromnetz und andererseits mit dem Ladekabel verbunden sein. Zum automatischen Verbinden und Lösen des Ladesteckers von dem Ladeanschluss am Elektrofahrzeug ist die Ladestation in mindestens einer, bevorzugt in zwei, drei oder mehreren Raumrichtungen verstellbar ausgebildet. Die Ladevorrichtung kann autonom ohne eine Person zum automatischen Einführen des Ladesteckers in das zu ladende Elektrofahrzeug und zum Entfernen des Ladesteckers betrieben werden.

Die Ladevorrichtung ist hinsichtlich eines Bauraums und elektrischer Verluste sowie Kosten optimiert. Dabei kann ein an einem Ende des Ladekabels angeordneter Ladestecker automatisch an die Position des Ladeanschlusses des Elektrofahrzeugs bewegt und dort in Bezug auf den Ladeanschluss ausgerichtet und in den Ladeanschluss, insbesondere eine Ladesteckerbuchse, eingesteckt werden.

Nach Beendigung des Ladevorgangs kann der Ladestecker mittels der Ladevorrichtung wieder automatisch aus dem Ladeanschluss gezogen oder entfernt werden. Die Ladevorrichtung ist universell für verschiedene Elektrofahrzeuge einsetzbar, da das Ladekabel mit dem Ladestecker an die jeweilige, nicht genormte Position zum Ladeanschluss an Elektrofahrzeugen transportiert werden kann. Mit anderen Worten: Die Ladevorrichtung ist für verschiedene Fahrzeugtypen mit unterschiedlichen Ladeanschlusspositionen geeignet.

Das Ladekabel ist insbesondere für ein Laden des Elektrofahrzeugs mit Gleichstrom ausgebildet. Bevorzugt ist das Ladekabel für ein Laden des Elektrofahrzeugs mit Gleichstrom oder optional Wechselstrom bei einem Ladestrom von beispielsweise wenigstens 125 A, insbesondere in einem Bereich von einigen Hundert Ampere bis zu einem oder mehreren Tausend Ampere, und/oder eine Ladespannung von wenigstens 125 V, insbesondere in einem Bereich von 230 V bis zu mehreren Tausend Volt, ausgebildet.

In einer möglichen Ausführungsform kann die Schleppkettenanordnung eingerichtet sein, als Satz von Kabeln zusätzlich zu dem Ladeübertragungskabel (auch Stromkabel genannt) und/oder dem Ladekabel elektrische Zusatzleitungen, wie zum Beispiel mindestens eine Steuerleitung, eine Signalleitung, eine Messleitung, eine Leistungsleitung, eine Kühlleitung, eine Versorgungsleitung oder dergleichen, aufzunehmen, zu führen und zu bewegen. Mit anderen Worten: Der Satz von Kabel kann als ein Energieführungssatz aus Ladekabeln, Ladeübertragungskabeln, Signalleitungen, Steuerleitungen, Leistungsleitungen, Messleitungen und/oder Kühlleitungen ausgebildet sein.

In einer möglichen Ausführungsform kann die Schleppkettenanordnung eingerichtet sein, den Satz von Kabeln in mehrere, insbesondere zwei oder drei, Raumrichtungen oder Transportierrichtungen zu führen und zu bewegen.

Beispielsweise kann der Satz von Kabeln, insbesondere das Ladekabel, horizontal in Längsrichtung, insbesondere nach vorne und nach hinten, und/oder horizontal in Querrichtung, insbesondere senkrecht zur Längsrichtung hin und her, und/oder vertikal in Hochrichtung, insbesondere nach oben und nach unten, transportiert werden. Hierdurch kann ein am Ende des Ladekabels angeordneter Ladestecker an jede beliebige Position bewegt und/oder ausgerichtet werden. Die Ladevorrichtung ist somit für eine korrekte und sichere Kopplung des Ladesteckers mit Ladeanschlüssen verschiedener Elektrofahrzeuge eingerichtet und geeignet.

Eine weitere Ausführungsform sieht vor, dass die Schleppkettenanordnung mindestens eine Schleppkette und mindestens eine Steckerhalterung umfasst. Die Schleppkette dient insbesondere einer Führung des Kabelsatzes, insbesondere des Ladeübertragungskabels, des Ladekabels und/oder der Zusatzleitungen. Die Schleppkette kann beispielsweise als ein Schlepphohlprofil, insbesondere ein Schleppkanal, ausgebildet sein.

Dabei kann der Satz von Kabeln durchgängig über mehrere Schleppketteneinheiten geführt werden oder sein. Auch können die mehreren Schleppketteneinheiten bei einer durchgängigen Führung des Kabelsatzes in Längsausdehnung des Kabelsatzes in Abstand zueinander angeordnet sein.

Zusätzlich oder alternativ kann der Kabelsatz modular aufgebaut sein. Beispielsweise kann der Kabelsatz mehrere Kabelabschnitte, insbesondere je Schleppketteneinheit einen Kabelabschnitt, aufweisen. Dabei können zwei Kabelabschnitte beispielsweise zwischen zwei Schleppketteneinheiten über eine Steckverbindung miteinander gekoppelt sein.

Zusätzlich kann die jeweilige Schleppketteneinheit eingerichtet sein, dass der Kabelsatz linear geführt ist. Alternativ kann die jeweilige Schleppketteneinheit derart eingerichtet sein, dass der Kabelsatz in mehrere Raumrichtungen, insbesondere dreidimensional, geführt ist. Beispielsweise kann der Kabelsatz im Übergangsbereich zwischen zwei Schleppketten um 180° umgelenkt sein. Durch eine solche dreidimensional geführte Schleppkette kann eine Zustellbewegung der Ladevorrichtung für den Ladestecker gleichzeitig mehrere Raumrichtungen abdecken.

Die Steckerhalterung (auch kurz Greifer genannt) kann beispielsweise als ein Greifarm, ein Greifhaken oder ein Mitführhaken ausgebildet sein.

Beispielsweise kann die Ladevorrichtung pro Raumrichtung oder Transporttierrichtung eine zugehörige Schleppkette umfassen. Darüber hinaus kann die Ladevorrichtung an einem der Enden des Kabelsatzes mit dem Ladestecker verbunden sein. Am gegenüberliegenden Ende ist der Kabelsatz mit einem Versorgungsanschluss oder Leistungsanschluss, insbesondere einen Erdanschluss, einer nahen oder entfernten Ladestation verbunden.

Der Ladestecker wiederum kann starr oder lösbar an der Steckerhalterung angeordnet sein. Alternativ kann beziehungsweise können die Schleppkette/n und/oder die Steckerhalterung eingerichtet sein, den Satz von Kabeln in allen Raumrichtungen mitzuführen und zu bewegen.

Darüber hinaus kann die Schleppkettenanordnung mittels mindestens einer Antriebsanordnung antreibbar und bewegbar sein. Beispielsweise kann die Antriebsanordnung pro Schleppkette eine zugehörige Antriebseinheit, zum Beispiel einen Motor, insbesondere einen Elektromotor oder dergleichen, umfassen.

Die jeweilige Antriebseinheit ist mit einer Verstelleinrichtung, zum Beispiel Linear-Aktuatoren, Winkel-Aktuatoren, Drehgelenke und/oder Kugelgelenke, gekoppelt, insbesondere bewegungsgekoppelt. Durch Ansteuern der Verstelleinrichtung, insbesondere der Linear-Aktuatoren, Winkel-Aktuatoren, Drehgelenke und/oder Kugelgelenke, kann die Steckerhalterung während eines Ladevorgangs den Ladestecker und seiner Position folgen (auch Feinverstellung genannt, die zum Nachfolgen einer Bewegung des gesteckten Ladesteckers während des Ladens des Elektrofahrzugs vorgesehen ist).

Alternativ oder zusätzlich kann die Steckerhalterung mittels der Verstelleinrichtung vor einem Ladevorgang in Richtung des Ladeanschlusses bewegt und in Bezug auf den Ladeanschluss ausgerichtet werden (auch Grobverstellung genannt, die zum Auffinden der nicht genormten Position des Ladeanschlusses am Elektrofahrzeug vorgesehen ist). Dabei kann die Ausrichtung der Winkellage des Ladesteckers zum Ladeanschluss durch separate Aktuatoren, insbesondere durch Winkel-Aktuatoren, erfolgen.

Des Weiteren kann die Steckhalterung mittels der Verstelleinrichtung nach einem Ladevorgang in Richtung des Ladesteckers zu dessen Aufnahme bewegt und zum Lösen des Ladesteckers von dem Ladeanschluss wegbewegt werden (auch Zustellbewegung genannt) .

Zur Verstellung der Steckhalterung mit oder ohne fixierten Ladestecker kann die Steckhalterung an einer beweglichen Einheit der Verstelleinrichtung angeordnet und befestigt sein. Optional kann die Steckhalterung selbst beweglich gelagert sein.

Die Antriebsanordnung kann beispielsweise auch als ein Linearantrieb ausgebildet sein. Der Linearantrieb kann insbesondere eine Linearverstelleinheit (zum Beispiel Basiseinheit/ortsfeste Schiene und Schlitten/bewegliche Schiene) und eine Antriebseinheit umfassen. Die Linearverstelleinheit kann beispielsweise eine ortsfeste Einheit, insbesondere eine ortsfeste Schiene oder ortsfeste Trägereinheit, und eine bewegliche Einheit, insbesondere einen beweglichen Schlitten (auch Mitnahmeschlitten genannt) oder eine bewegliche Schiene umfassen, die relativ zu der ortsfesten Einheit bewegbar ist. Die Antriebseinheit ist insbesondere als ein Motor ausgebildet, der mit der beweglichen Einheit gekoppelt ist, um diese entlang der ortsfesten Einheit zu bewegen. Darüber hinaus kann die Ladevorrichtung mindestens einen Linearantrieb pro Raumrichtung umfassen. Beispielsweise umfasst die Ladevorrichtung mindestens einen Linearantrieb für eine Längsbewegung, insbesondere für eine große Verstelllänge entlang einer Längsseite des Elektrofahrzeugs, mindestens einen Linearantrieb für eine Querbewegung, insbesondere senkrecht zur Längsbewegung, zum Beispiel eine Zustellbewegung im Bereich des Ladeanschlusses, und/oder mindestens einen Linearantrieb für eine Vertikalbewegung, insbesondere eine Hochbewegung relativ zur Längsbewegung und/oder Querbewegung, zum Beispiel eine Zustellbewegung im Bereich des Ladeanschlusses.

In einer weiteren Ausführungsform ist die jeweilige Schleppkette parallel zur jeweiligen Verstelleinrichtung, insbesondere einer Linearverstelleinheit, angeordnet. Beispielsweise ist die jeweilige Schleppkette einerseits an der ortsfesten Einheit und andererseits an der ortsbeweglichen Einheit zur Mitnahme befestigt.

Eine weitere optionale Ausführungsform sieht vor, dass die Schleppkettenanordnung eingerichtet ist, den Satz von Kabeln, insbesondere das Ladekabel und einen endseitig am Ladekabel vorgesehene Ladestecker, zu kühlen. Insbesondere bei Auslegung der Ladevorrichtung als eine Hochleistungsladevorrichtung mit einer permanenten Ladeleistung von beispielsweise 200 A oder größer bis zu mehreren Tausend Ampere, weist die Schleppkettenanordnung ein Kühlelement, insbesondere eine oder mehrere Kühlleitung/en, zum Beispiel jeweils ein oder mehrere Zulaufkühlleitungen und Rücklaufkühlleitungen, zum Kühlen des Ladekabels und/oder des Ladesteckers auf.

Darüber hinaus kann die Schleppkette eine Mehrzahl von Schleppketten, insbesondere pro Raumrichtung mindestens eine Schleppkette, umfassen. Die jeweilige Schleppkette kann flexibel und umlenkbar ausgebildet sein. Insbesondere ist die jeweilige Schleppkette entlang einer Längslinie flexibel umlenkbar ausgebildet.

In einer möglichen Weiterbildung kann die jeweilige Schleppkette als ein flexibler Hohlprofilträger ausgebildet sein, in welchem der Kabelsatz, insbesondere das Ladeübertragungskabel, das Ladekabel und/oder die Hilfsleitungen, zumindest über einen Teil dessen Länge beziehungsweise ihrer Längen und/oder abschnittsweise, im Inneren des Hohlprofilträgers aufgenommen ist. Zusätzlich kann der Hohlprofilträger, insbesondere je Schleppketteneinheit, an einem oder beiden Enden jeweils mit einer Zugentlastungseinheit für das/die betreffende/n Ladeübertragungskabel, das Ladekabel und/oder die Hilfsleitungen versehen sein. Mit anderen Worten: Der gesamte Kabelsatz wird mittels der Zugentlastungseinheiten am Eingang und am Ausgang der jeweiligen Schleppketteneinheit zugentlastet. Der flexible Hohlprofilträger kann beispielsweise offen, halboffen oder geschlossen ausgebildet sein.

Darüber hinaus kann der Kabelsatz, insbesondere das Ladeübertragungskabel, das Ladekabel und/oder die Zusatzleitungen, in einem Übergang zwischen zwei Raumrichtungen schleppkettenfrei geführt sein. Optional kann im Übergang ein zusätzlicher einfacher Schutz durch Führen des Kabelsatzes in einem flexiblen Wellrohr, flexiblen Wellschlauch oder dergleichen vorgesehen sein.

In einer möglichen Ausführungsform kann der Kabelsatz, insbesondere das/die Ladeübertragungskabel und/oder das Ladekabel oder das jeweilige Kabel eine Mehrzahl von Kupferlitzen umfassen. Insbesondere kann das jeweilige Kabel oder die jeweilige Leitung eine Mehrzahl von biegsamen Kupferlitzen umfassen. Das Ladeübertragungskabel und/oder die Stromtransportleitung kann jeweils eine Mehrzahl von Kupferlitzen oder Kupferflachleitungen mit einem größeren Querschnitt oder Umfang als die Kupferlitzen des Ladekabels umfassen. Insbesondere können die Kupferlitzen als flexible Einzelleitungen ausgebildet sein. Durch eine solche Ausbildung können die Ladeübertragungskabel kühlfrei und verlustarm mittels der Schleppkettenanordnung geführt werden. Nur der Bereich des Ladekabels mit dem kleineren Querschnitt oder Umfang und/oder der Ladestecker können möglicherweise gekühlt werden.

Durch die Auslegung des Ladeübertragungskabels oder des Ladekabels jeweils als eine Mehrzahl von flexiblen Litzen, insbesondere Kupferlitzen, kann der Bauraum für die in mindestens drei Raumrichtungen bewegbare Schleppkettenanordnung minimiert werden. Zudem ermöglichen die mehreren hochflexiblen Litzen pro elektrischer Verbindung des Kabelsatzes niedrige elektrische Verluste. Auch kann der Gesamtleitungsquerschnitt flexibel durch die Anzahl der eingesetzten hochflexiblen Litzen pro elektrischer Verbindung des Kabelsatzes und deren Querschnitt auf die Leistungsklasse der autonomen Ladevorrichtung angepasst werden. Unter einer Litze wird insbesondere ein aus dünnen Einzeldrähten gebildeter und damit leicht zu biegender elektrischer Leiter verstanden.

Des Weiteren kann der Satz von Kabeln über mindestens ein Zugentlastungselement an mindestens einem Ende der jeweiligen Schleppkette befestigt sein. Beispielsweise greift ein erstes Ende des Kabelsatzes, insbesondere des jeweiligen Kabels, über ein erstes Zugentlastungselement der Schleppkette an eine Versorgungsleitung, insbesondere eine Anschlussleitung, zum Beispiel eine Erdleitung oder eine Erdschiene, einer Ladestation an. An einem gegenüberliegenden zweiten Ende des Kabelsatzes greift das jeweilige Kabel an dem Ladestecker über ein zweites Zugentlastungselement an. Die Enden des Kabelsatzes, insbesondere jedes Kabels oder jeder Leitung, können an der Ladestation und/oder an dem Ladestecker fest oder über eine Steckverbindung angreifen.

Zusätzlich kann die jeweilige Schleppkette mindestens ein Führungsmittel für den Satz von Kabeln umfassen. Beispielweise können Trennstege mit und ohne Höhenunterteilung, Kabelkanalabschnitte, Kabeldurchführungen, Kabelrinnen, Kabelnuten oder dergleichen vorgesehen sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch in einer Ansicht von hinten ein Elektrofahrzeug an einer erfindungsgemäßen Ladevorrichtung,
- FIG 2: schematisch in perspektivischer Darstellung ein erstes Ausführungsbeispiel für die erfindungsgemäße Ladevorrichtung gemäß Figur 1,
- FIG 3: schematisch die erfindungsgemäße Ladevorrichtung gemäß Figur 1 in einer ersten Endposition,
- FIG 4: schematisch die erfindungsgemäße Ladevorrichtung gemäß Figur 1 in einer zweiten Endposition,
- FIG 5: schematisch in einer perspektivischen Darstellung ein zweites Ausführungsbeispiel für eine erfindungsgemäße Ladevorrichtung,
- FIG 6: schematisch die erfindungsgemäße Ladevorrichtung gemäß Figur 5 in Draufsicht von oben, und
- FIG 7: schematisch die erfindungsgemäße Ladevorrichtung gemäß Figur 5 in einer Seitenansicht.

Einander entsprechende Teile sind in den Figuren mit denselben Bezugszeichen versehen.

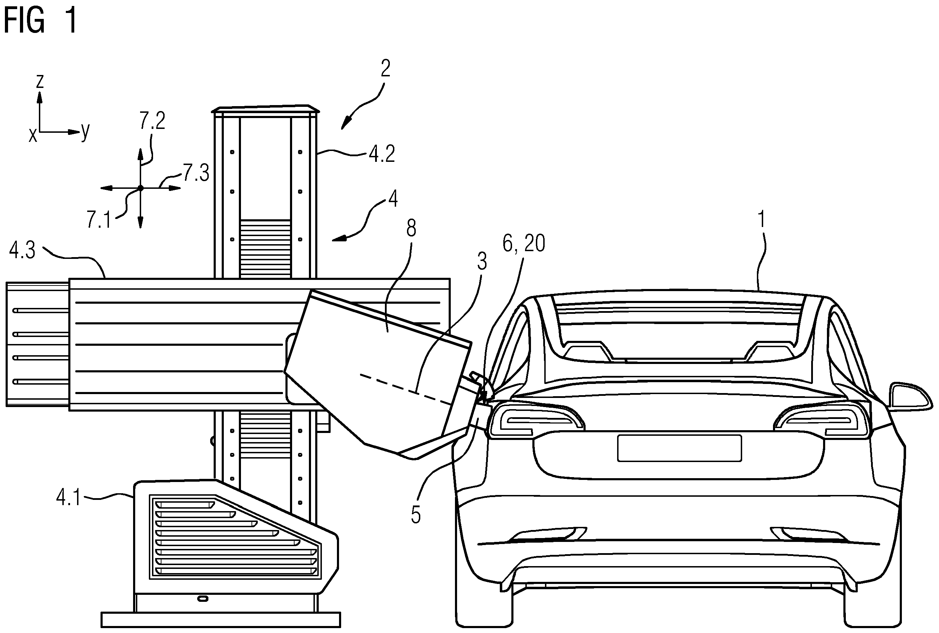

Figur 1 zeigt schematisch in einer Ansicht von hinten ein Elektrofahrzeug 1 an einer erfindungsgemäßen Ladevorrichtung 2.

Die Ladevorrichtung 2 ist als eine autonome Ladestation zum Laden des Elektrofahrzeugs 1 ausgebildet. Das Elektrofahrzeug 1 ist beispielsweise ein autonom fahrendes Fahrzeug, das selbsttätig zum Laden an die Ladevorrichtung 2 heranfährt.

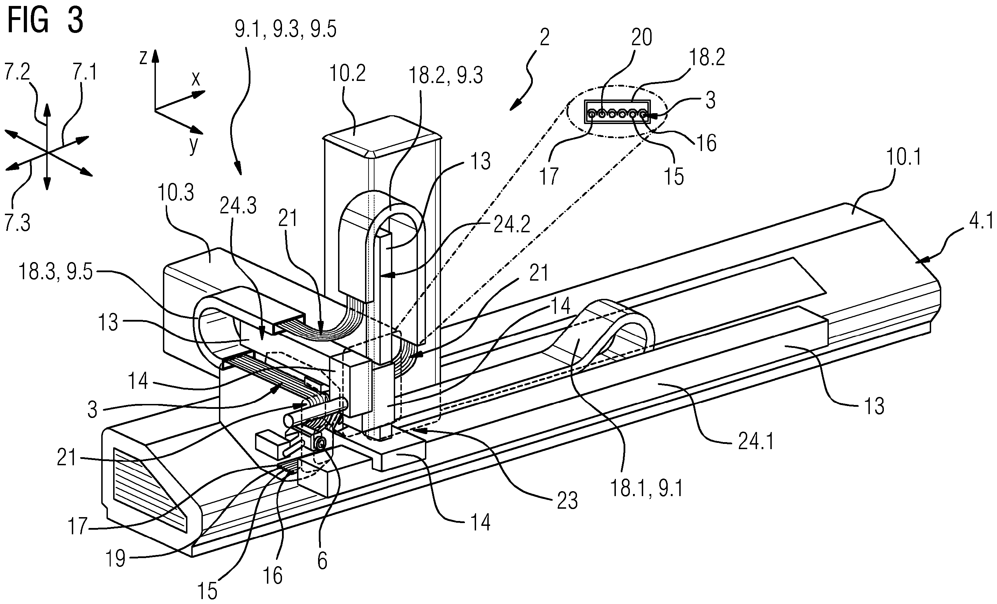

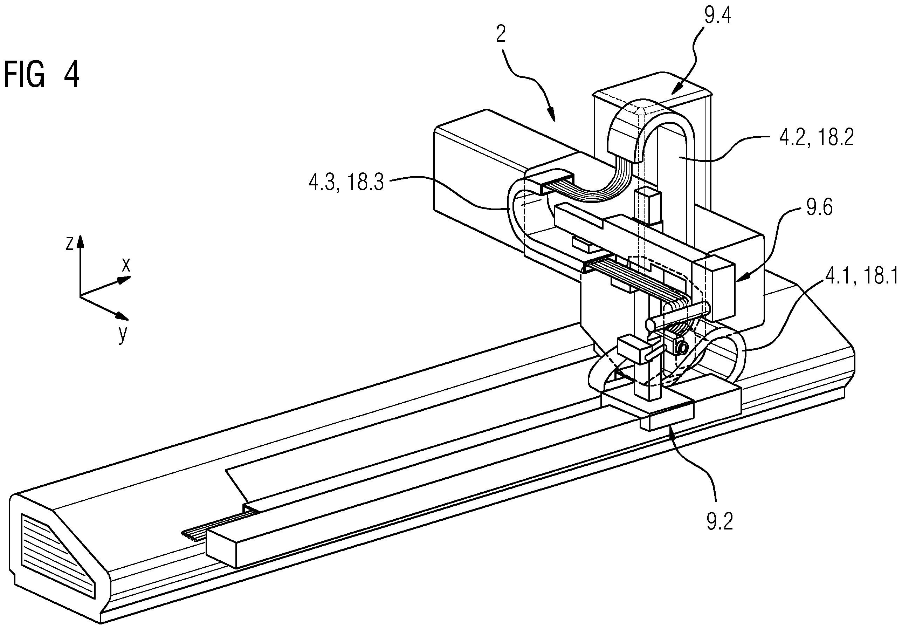

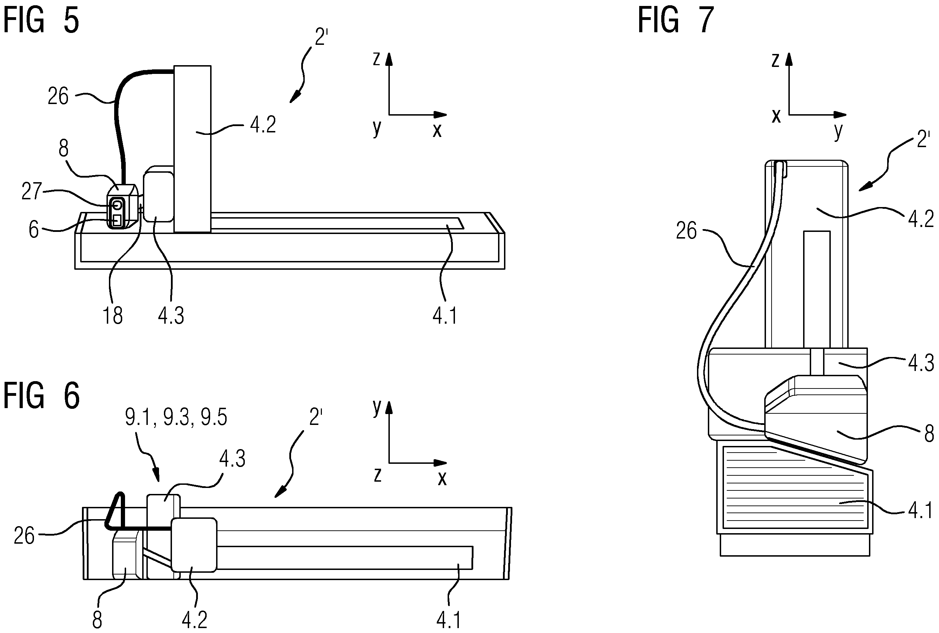

Die Ladevorrichtung 2, insbesondere die autonome Ladestation, umfasst zum flexiblen Heranführen eines Satzes von Kabeln 3 (im Weiteren kurz Kabelsatz 3 genannt) von einem nicht dargestellten Versorgungsanschluss oder Leistungsanschluss, insbesondere einen Erdanschluss, einer nahen oder entfernten Ladestation (nicht näher dargestellt) an einen Ladeanschluss 5 des Elektrofahrzeugs 1 eine Schleppkettenanordnung 4, die im Detail in Figuren 3 und 4 gemäß einem ersten Ausführungsbeispiel und in Figuren 5 bis 7 gemäß einem zweiten Ausführungsbeispiel näher gezeigt und beschrieben ist.

Die Ladevorrichtung 2 mit der Schleppkettenanordnung 4 ist als ein Laderoboter ausgebildet, mittels welchem eine an der Schleppkettenanordnung 4 angeordnete Steckerhalterung 8 variabel, insbesondere in mehrere Raumrichtungen 7.1 bis 7.3, in Richtung des Ladeanschlusses 5 bewegt und/oder in Bezug auf den Ladeanschluss 5 ausgerichtet werden kann.

Das Elektrofahrzeug 1 umfasst als Ladeanschluss 5 zum Beispiel eine Ladesteckerbuchse. Der Kabelsatz 3 umfasst an seinem in Richtung des Elektrofahrzeugs 1 weisenden Ende einen Ladestecker 6, der zum Koppeln mit dem Ladeanschluss 5 ausgebildet ist.

Die Schleppkettenanordnung 4 (auch Kabelführungsanordnung genannt) ist insbesondere eingerichtet, den Kabelsatz 3 flexibel in Richtung des Ladeanschlusses 5 in mindestens eine Raumrichtung 7.1 bis 7.3 (auch Transportierrichtung genannt) zu bewegen oder zu transportieren und in Bezug auf den Ladeanschluss 5 des Elektrofahrzeugs 1 auszurichten.

Durch eine solche Ladevorrichtung 2 kann der Kabelsatz 3 flexibel in eine erste Raumrichtung 7.1 in Längsrichtung x, in eine zweite Raumrichtung 7.2 in Querrichtung y und/oder in eine dritte Raumrichtung 7.3 in Hochrichtung z über eine entsprechende Länge oder eine entsprechende Strecke hinweg bis zu dem Ladeanschluss 5 des an die Ladevorrichtung 2 autonom herangefahrenen Elektrofahrzeugs 1 bewegt oder transportiert werden.

Die Ladevorrichtung 2 ist derart eingerichtet, dass der endseitig an dem Kabelsatz 3 angeordnete Ladestecker 6 automatisch an die Position des Ladeanschlusses 5 des Elektrofahrzeugs 1 bewegt und dort in Bezug auf den Ladeanschluss 5 ausgerichtet und in den Ladeanschluss 5 eingesteckt wird. Nach Beendigung des Ladevorgangs kann der Ladestecker 6 mittels der Ladevorrichtung 2 wieder automatisch aus dem Ladeanschluss 5 gezogen oder entfernt werden.

Die Ladevorrichtung 2 ist hierdurch universell für verschiedene Elektrofahrzeuge 1 einsetzbar, da der Kabelsatz 3 mit dem Ladestecker 6 an die jeweilige, nicht genormte Position des Ladeanschlusses 5 an Elektrofahrzeugen 1 transportiert werden kann.

Beispielsweise kann der Ladeanschluss 5 am Elektrofahrzeug 1 vorne, an der Seite oder hinten vorgesehen sein. Die als Laderoboter ausgebildete autonome Ladevorrichtung 2 ist insbesondere eingerichtet, den Ladestecker 6 automatisch, beispielsweise indirekt mittels der Schleppkettenanordnung 4, in Richtung eines identifizierten Ladeanschlusses 5 eines zu ladenden Elektrofahrzeugs 1 zu bewegen, in Bezug auf diesen Ladeanschluss 5 auszurichten und in diesen einzuführen.

In einer einfachen Ausführungsform ist die Ladevorrichtung 2 eingerichtet, nur in Querrichtung y den Ladestecker 6 automatisch zum Ladeanschluss 5 zu bewegen und in diesen einzuführen. Alternativ kann die Ladevorrichtung 2 eingerichtet sein, den Ladestecker 6 automatisch in Längsrichtung x zur Verstellung des Ladesteckers 6 in Richtung des Ladeanschlusses 5 und in Querrichtung y zum Einführen des Ladesteckers 6 in den Ladeanschluss 5 zu bewegen. Zusätzlich kann die Ladevorrichtung 2 eingerichtet sein, den Ladestecker 6 automatisch in Hochrichtung z zu bewegen.

Im gezeigten Ausführungsbeispiel nach Figur 1 ist die Ladevorrichtung 2 eingerichtet, den Ladestecker 6 in drei Raumrichtungen 7.1 bis 7.3 in Richtung des Ladeanschlusses 5 zu bewegen. Zusätzlich kann der Ladestecker 6 über mindestens Winkel-Aktuatoren in seiner Winkellage ausgerichtet werden. Ferner kann ein zusätzlicher Aktuator vorgesehen sein, das Einführen, insbesondere Einstecken, des Ladesteckers 6 in den Ladeanschluss 5 ausführt.

Hierzu umfasst die Schleppkettenanordnung 4 je Raumrichtung 7.1 bis 7.3 jeweils eine zugehörige Schleppketteneinheit 4.1 bis 4.3 und eine Steckerhalterung 8 für den Ladestecker 6, zum automatischen Aufnehmen, insbesondere Greifen, Fixieren und optionalen Freigeben oder Lösen des Ladesteckers 6.

Eine erste Schleppketteneinheit 4.1 ist eingerichtet, den Kabelsatz 3 in Längsrichtung x hin und her zu bewegen. Eine zweite Schleppketteneinheit 4.2 ist eingerichtet, den Kabelsatz 3 in Hochrichtung z hoch und runter zu bewegen. Eine dritte Schleppketteneinheit 4.3 ist eingerichtet, den Kabelsatz 3 in Querrichtung y hin und her zu bewegen.

Die dritte Schleppketteneinheit 4.3 kann an der zweiten Schleppketteneinheit 4.2 oder der ersten Schleppketteneinheit 4.1 beweglich angeordnet sein. Die zweite Schleppketteneinheit 4.2 kann an der ersten Schleppketteneinheit 4.1 oder an der dritten Schleppketteneinheit 4.3 beweglich angeordnet sein.

Die jeweiligen Schleppketteneinheiten 4.1 bis 4.3 sind relativ zueinander beweglich angeordnet und gelagert.

Beispielsweise ist die zweite Schleppketteneinheit 4.2 auf Mitnahme an der ersten Schleppketteneinheit 4.1 für eine gemeinsame Verstellung in Längsrichtung x befestigt. Die dritte Schleppketteneinheit 4.3 ist auf Mitnahme an der zweiten Schleppketteneinheit 4.2 für eine Verstellung in Hochrichtung z befestigt und über diese zweite Schleppketteneinheit 4.2 auf Mitnahme mit der ersten Schleppketteneinheit 4.1 für eine Verstellung in Längsrichtung x gekoppelt. Die dritte Schleppketteneinheit 4.3 ist zusätzlich relativ bewegbar zur zweiten Schleppketteneinheit 4.2 und zur ersten Schleppketteneinheit 4.1 für eine Verstellung in Querrichtung y angeordnet.

Die Steckerhalterung 8 ist an der dritten Schleppketteneinheit 4.3 angeordnet.

Die Steckerhalterung 8 ist zum Ausrichten und Positionieren des Ladesteckers 6 in Bezug auf den Ladeanschluss 5 eingerichtet. Hierzu ist die dritte Schleppketteneinheit 4.3, an welcher die Steckerhalterung 8 befestigt ist, relativ bewegbar zur zweiten Schleppketteneinheit 4.2 und zur ersten Schleppketteneinheit 4.1 für eine Verstellung in Querrichtung y angeordnet. Insbesondere ist die dritte Schleppketteneinheit 4.3 und mit dieser die, insbesondere starre oder feste, Steckerhalterung 8 beweglich an der zweiten Schleppketteneinheit 4.2, bevorzugt mittels separater Aktuatoren (nicht dargestellt), zum Beispiel mittels eines Linear-Aktuators, eines Winkel-Aktuators, eines Drehgelenks, eines Kugelgelenks oder dergleichen, bewegbar angeordnet.

Der Ladestecker 6 ist noch fest oder starr mit der Steckerhalterung 8 verbunden. Zum Ausgleich von geringen Fahrzeugbewegungen ist die Steckerhalterung 8 eingerichtet, den Ladestecker 6 freizugeben, so dass dieser einerseits in dem Ladeanschluss 5 gesteckt ist und andererseits mit der als Ladestation ausgebildeten Ladevorrichtung 2 über den Kabelsatz 3 flexibel verbunden ist.

Bevorzugt wird die Steckerhalterung 8 mittels der Schleppkettenanordnung 4 in Richtung des Ladeanschlusses 5 bewegt und bei Erreichen der Längsposition des Ladeanschlusses 5 relativ zu diesem Ladeanschluss 5 ausgerichtet, um anschließend automatisch den Ladestecker 6 in den Ladeanschluss 5 einzuführen oder von diesem zu lösen oder zu entkoppeln.

Optional kann die Steckerhalterung 8 selbst beweglich gelagert sein und relativ zum Ladeanschluss 5 (dargestellt in Figur 1) ausgerichtet und in den Ladeanschluss 5 gesteckt oder von diesem wieder gelöst oder entkopppelt werden.

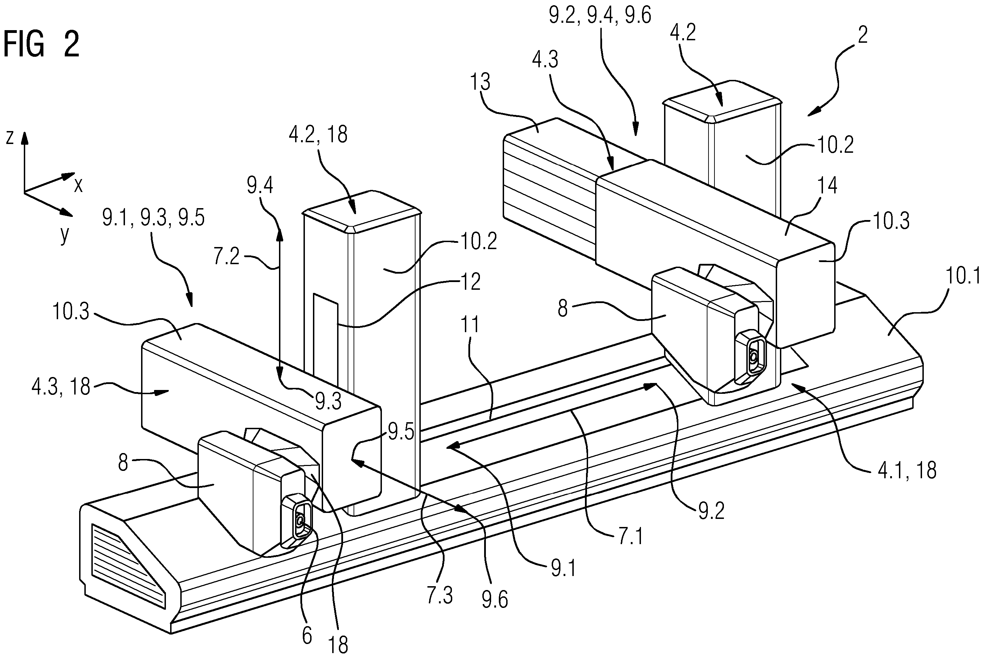

Figur 2 zeigt schematisch in perspektivischer Darstellung das erste Ausführungsbeispiel für die erfindungsgemäße Ladevorrichtung 2 gemäß Figur 1.

Figur 2 zeigt die Ladevorrichtung 2 in ihren zwei Endpositionen 9.1, 9.2, zwischen denen der Ladestecker 6 an eine beliebige Position in Längsrichtung x in die erste Raumrichtung 7.1 bewegt werden kann. Dazu ist die zweite Schleppketteneinheit 4.2 relativ zur ersten Schleppketteneinheit 4.1 in Längsrichtung x zwischen den beiden Endpositionen 9.1 und 9.2 verstellbar und an eine beliebige Position stellbar.

Des Weiteren zeigt die Figur 2 die dritte Schleppketteneinheit 4.3 in ihren zwei Endpositionen 9.3 und 9.4, zwischen denen der Ladestecker 6 an eine beliebige Position in Hochrichtung z in die zweite Raumrichtung 7.2 bewegt werden kann. Hierzu ist die dritte Schleppketteneinheit 4.3 relativ zur zweiten Schleppketteneinheit 4.2 und zur ersten Schleppketteneinheit 4.1 in Hochrichtung z zwischen den beiden Endpositionen 9.3 und 9.4 bewegbar und an eine beliebige Position stellbar.

Die dritte Schleppketteneinheit 4.3 ist darüber hinaus in ihren zwei Endpositionen 9.5 und 9.6 dargestellt, zwischen denen der Ladestecker 6 an eine beliebige Position in Querrichtung y in die dritte Raumrichtung 7.3 bewegt werden kann.

Bevorzugt wird die Steckerhalterung 8 mittels der Schleppkettenanordnung 4 mit dem an diesen lösbar gehaltenen Ladestecker 6 in Richtung des Ladeanschlusses 5 bewegt und bei Erreichen der Längsposition des Ladeanschlusses 5 relativ zu diesem Ladeanschluss 5 in allen drei Raumrichtungen 7.1 bis 7.3 ausgerichtet, um anschließend automatisch den Ladestecker 6 in Querrichtung y in den Ladeanschluss 5 einzuführen oder von diesem zu lösen oder zu entkoppeln.

Zur Ausrichtung der Steckerhalterung 8 zum Verbinden des Ladesteckers 6 mit dem Ladeanschluss 5 können weitere Aktuatoren, insbesondere Winkel-Aktuatoren mit zusätzlicher Winkelausrichtung und Linear-Aktuatoren zum Einführen des Ladesteckers 6 in den Ladeanschluss 5, vorgesehen sein.

Optional kann die Steckerhalterung 8 selbst beweglich gelagert sein und relativ zum Ladeanschluss 5 (dargestellt in Figur 1) ausgerichtet und in den Ladeanschluss 5 gesteckt oder von diesem wieder gelöst oder entkopppelt werden.

Die jeweilige Schleppketteneinheit 4.1 bis 4.3 umfasst ein Gehäuse 10.1 bis 10.3.

Zur Längsverstellung des Ladesteckers 6 ist dieser Ladestecker 6 über die Steckerhalterung 8 und diese über die miteinander beweglich gekoppelten Schleppketteneinheiten 4.2 und 4.3 in einer Längsausnehmung 11 des Gehäuses 10.1 der ersten Schleppketteneinheit 4.1 längsverstellbar angeordnet. Im gezeigten Beispiel ist die zweite Schleppketteneinheit 4.2 in Längsrichtung x relativ zur ersten Schleppketteneinheit 4.1 verstellbar.

Zur Hochverstellung der Ladevorrichtung 2, insbesondere des Ladesteckers 6, ist die dritte Schleppketteneinheit 4.3 in einer Vertikalausnehmung 12 des Gehäuses 10.2 der zweiten Schleppketteneinheit 4.2 relativ zu der zweiten Schleppketteneinheit 4.2 und der ersten Schleppketteneinheit 4.1 vertikal in Hochrichtung z verstellbar angeordnet.

Zur Querverstellung der Ladevorrichtung 2, insbesondere des Ladesteckers 6, kann die dritte Schleppketteneinheit 4.3 zusätzlich in Querrichtung y relativ zur zweiten Schleppketteneinheit 4.2 und/oder ersten Schleppketteneinheit 4.1 beweglich angeordnet sein. Hierzu kann das Gehäuse 10.3 in nicht näher dargestellter Art und Weise eine Querausnehmung in Richtung der zweiten Schleppketteneinheit 4.2 umfassen.

Jede der Schleppketteneinheiten 4.1 bis 4.3 kann eine zugehörige Verstelleinrichtung 18, zum Beispiel ein Schienensystem, ein Führungssystem mit einem Schlitten oder dergleichen, umfassen. Die Verstelleinrichtung 18 kann zum Beispiel Linear-Aktuatoren, Winkel-Aktuatoren, Drehgelenke und/oder Kugelgelenke umfassen. Durch Ansteuern der Verstelleinrichtung 18, insbesondere der Linear-Aktuatoren, Winkel-Aktuatoren, Drehgelenke und/oder Kugelgelenke, können die Schleppketteneinheiten 4.1 bis 4.3 unabhängig voneinander oder abhängig voneinander in/um eine oder mehrere der Raumrichtungen 7.1 bis 7.3 translatorisch oder rotatorisch verstellt werden, wodurch wiederum die fest mit der Schleppketteneinheit 4.3 verbundene Steckerhalterung 8 vor einem Ladevorgang, während eines Ladevorgangs und/oder nach einem Ladevorgang den Ladestecker 6 bewegt und/oder die Position eines freigegebenen und gesteckten Ladesteckers 6 nachverfolgt und/oder der Ladestecker 6 in Bezug auf den Ladeanschluss 5 ausgerichtet werden kann.

Beispielsweise kann die jeweilige Verstelleinrichtung 18 eine ortsfeste Einheit 13, zum Beispiel eine feste Schiene oder eine feste Führung oder ein festes Gelenk, und eine bewegliche Einheit 14, zum Beispiel eine bewegliche Schiene oder einen Schlitten oder ein bewegliches Gelenk, umfassen. Die jeweilige Verstelleinrichtung 18, insbesondere deren bewegliche Einheit 14, ist mit einem nicht näher dargestellten Antrieb, insbesondere einem Motor, zum Beispiel einem Elektromotor, oder dergleichen, bewegungsgekoppelt.

Zur Querverstellung der Ladevorrichtung 2, insbesondere des Ladesteckers 6, kann die dritte Schleppketteneinheit 4.3 auch in einem mehrteiligen Gehäuse 10.3, bestehend aus einem ortsfesten Gehäuseteil und einem beweglichen Gehäuseteil, angeordnet sein. Das bewegliche Gehäuseteil ist mit der beweglichen Einheit 13 der Verstelleinrichtung 18 gekoppelt und ist beweglich in Querrichtung y und damit in die dritte Raumrichtung 7.3 relativ zu der zweiten Raumrichtung 7.2. Das ortsfeste Gehäuseteil ist mit der ortsfesten Einheit 14 der Verstelleinrichtung 18 gekoppelt. Des Weiteren ist das Gehäuse 10.3 mit der zweiten Schleppketteneinheit 4.2 gekoppelt. Hierzu kann das Gehäuse 10.3 in nicht näher dargestellter Art und Weise eine Querausnehmung in Richtung der zweiten Schleppketteneinheit 4.2 umfassen.

Auch können die anderen Gehäuse 10.1 und 10.2 der anderen Raumrichtungen 7.1 und 7.3 mehrteilig ausgebildet sein und analog zum Gehäuse 10.3 bei einer Bewegung der zugehörigen Schleppkette 18.1 beziehungsweise 18.3 teilweise mitbewegbar sein.

Figur 3 zeigt schematisch in teiltransparenter Darstellung die erfindungsgemäße Ladevorrichtung 2 gemäß Figur 1 in der ersten Endlage mit den Endpositionen 9.1, 9.3 und 9.5 der Schleppketten 18.1, 18.2 beziehungsweise 18.3.

Der Kabelsatz 3 umfasst mindestens ein Ladekabel 15 für ein Laden des Elektrofahrzeugs 1 mit Gleichstrom oder optional Wechselstrom. Bevorzugt ist das Ladekabel 15 für ein Laden des Elektrofahrzeugs 1 mit Gleichstrom oder optional Wechselstrom bei einem Ladestrom von beispielsweise wenigstens 200 A oder bis hin zu mehreren tausend Ampere und/oder eine Ladespannung von wenigstens 125 V bis hin zu mehreren Tausend Volt ausgebildet.

Der Kabelsatz 3 kann zusätzlich zu dem Ladekabel 15 ein Ladeübertragungskabel 16 (auch Stromkabel genannt) und/oder elektrische Zusatzleitungen 17, wie zum Beispiel mindestens eine Steuerleitung, eine Signalleitung, eine Messleitung, eine Leistungsleitung, eine Kühlleitung 22, eine Versorgungsleitung oder dergleichen, umfassen.

Die Schleppkettenanordnung 4 ist eingerichtet, den Kabelsatz 3 aufzunehmen, zu führen und in mindestens ein oder mehrere oder alle Raumrichtungen 7.1 bis 7.3 zu bewegen.

Der Kabelsatz 3 ist durchgängig über mehrere Schleppketteneinheiten 4.1 bis 4.3 geführt. Darüber hinaus können die mehreren Schleppketteneinheiten 4.1 bis 4.3 bei einer durchgängigen Führung des Kabelsatzes 3 in Abstand zueinander jeweils angeordnet sein. Insbesondere kann die Führung für den Kabelsatz 3 durch diese Abstände zwischen den Schleppketteneinheiten 4.1 bis 4.3 abschnittsweise unterbrochen sein.

In nicht näher dargestellter Art und Weise kann der Kabelsatz 3 auch modular aufgebaut sein. Beispielsweise kann der Kabelsatz 3 mehrere Kabelabschnitte, insbesondere je Schleppketteneinheit 4.1 bis 4.3 einen Kabelabschnitt, aufweisen. Dabei können zwei Kabelabschnitte beispielsweise zwischen zwei Schleppketteneinheiten 4.1 und 4.2 oder 4.2 und 4.3 über eine Verbindung, beispielsweise eine Steckverbindung, miteinander gekoppelt sein.

Die jeweilige Schleppketteneinheit 4.1 bis 4.3 umfasst eine zugehörige Schleppkette 18.1 bis 18.3, insbesondere für eine Führung des Kabelsatzes 3.

Die jeweilige Schleppkette 18.1 bis 18.3 kann beispielsweise als ein Schlepphohlprofil, insbesondere ein Schleppkanal oder dergleichen, ausgebildet sein. Beispielsweise kann die Ladevorrichtung 2 pro Raumrichtung 7.1 bis 7.3 eine zugehörige Schleppkette 18.1 bis 18.3 umfassen. An einem Kabelsatzende 19 des Kabelsatzes 3 kann dieses mit dem Ladestecker 6, zum Beispiel über eine formschlüssige und/oder kraftschlüssige Verbindung, insbesondere eine Klemmverbindung, eine Steckverbindung oder dergleichen, gekoppelt sein. Der Ladestecker 6 ist wiederum lösbar oder fest oder fixiert an der Steckerhalterung 8 angeordnet.

Die jeweilige Schleppkette 18.1 bis 18.3 kann flexibel und umlenkbar ausgebildet sein. Insbesondere ist die jeweilige Schleppkette 18.1 bis 18.3 entlang ihrer jeweiligen Längslinie flexibel umlenkbar, insbesondere um 180° oder entsprechend der Führung in der jeweiligen Schleppkette 18.1 bis 18.3 mit einem anderen Winkel umlenkbar, ausgebildet. Die jeweilige Schleppkette 18.1 bis 18.3 ist in dem zugehörigen Gehäuse 10.1 bis 10.3 angeordnet.

In einer möglichen Weiterbildung kann die jeweilige Schleppkette 18.1 bis 18.3 als ein flexibler Hohlprofilträger offen, halboffen oder geschlossen ausgebildet sein. In schleppkettenfreien Abschnitten des Kabelsatzes 3 kann ein flexibler Schutzmantel, insbesondere ein flexibles Wellrohr, ein flexibles Hohlrohr, ein flexibler Wellschlauch oder dergleichen, zum Schutz der Kabel vorgesehen sein. Der Kabelsatz 3, insbesondere das Ladeübertragungskabel 16, das Ladekabel 15 und/oder die Zusatzleitungen 17 (auch Hilfsleitungen genannt), können in dem Hohlprofilträger oder in dem flexiblen Schutzmantel zumindest über einen Teil ihrer Länge und/oder abschnittsweise, im Inneren des Hohlprofilträgers beziehungsweise des Schutzmantels aufgenommen sein.

Zusätzlich kann die jeweilige Schleppkette 18.1 bis 18.3 an einem oder beiden Enden jeweils mit einer Zugentlastungseinheit 20 für das jeweilige Kabel des Kabelsatzes 3, insbesondere das betreffende Ladeübertragungskabel 16, das Ladekabel 15 und/oder die Zusatzleitungen 17, versehen sein.

In einem Übergang 21 zwischen zwei der Raumrichtungen 7.1 bis 7.3, zum Beispiel zwischen den Raumrichtungen 7.1 und 7.2, 7.2 und 7.3 beziehungsweise 7.3 und 7.1, ist die Schleppkettenanordnung 4 schleppkettenfrei und somit ohne Hohlprofilträger ausgebildet. Diese schleppkettenfreien Übergänge 21 können mit einem zusätzlichen Schutz durch Führen des Kabelsatzes 3 in flexiblem Wellrohr, flexiblem Wellschlauch oder dergleichen versehen sein.

Im ersten Ausführungsbeispiel ist der Kabelsatz 3 aus einer Mehrzahl von Kupferlitzen gebildet. Insbesondere kann der Kabelsatz 3 eine Mehrzahl von biegsamen Kupferlitzen umfassen. Insbesondere können die Kupferlitzen als flexible Einzelleitungen ausgebildet sein. Aufgrund des Einsatzes von Kupferlitzen in der jeweiligen Schleppkette 18.1 bis 18.3 als Kabelsatz 3 kann der Leitungsquerschnitt entsprechend so gewählt werden, dass die elektrischen Verluste möglichst gering sind. So können ein oder mehrere Kupferlitzen für den Stromtransport zum Einsatz kommen. Besonders vorteilhaft sind hochflexible Kupferlitzen, wodurch aufgrund des geringen Biegeradius der Bauraum und somit die jeweilige Schleppkette 18.1 bis 18.3 optimiert werden kann.

Insbesondere kann jedes einzelne Kabel, zum Beispiel das Ladekabel 15, insbesondere jedes einzelne Polkabel, des Kabelsatzes 3 aus mehreren flexiblen Litzen, insbesondere Kupferlitzen, gebildet sein. Der Gesamtquerschnitt des Kabelsatzes 3 kann durch die Verwendung von mehreren Litzen für ein Kabel einfach an die Leistungsklasse der autonomen Ladevorrichtung 2 angepasst werden.

Je nach Art der Ladevorrichtung 2, zum Beispiel Hochleistungsladevorrichtung, und Querschnitt der Kupferlitzen kann oder können zusätzlich eine/mehrere Kühlleitungen 22 zur Kühlung des Kabelsatzes 3, des Ladekabels und/oder des Ladesteckers 6 vorgesehen sein.

Die Steckerhalterung 8 kann beispielsweise als ein Greifarm, ein Greifhaken oder ein Mitführhaken ausgebildet sein, um den Ladestecker 6 automatisch zu greifen und zu halten/zu fixieren, insbesondere im Verfahrzustand oder nach einem Ladevorgang, oder optional freizugeben und zu lösen, während eines Ladevorgangs.

Darüber hinaus kann die jeweilige Schleppkette 18.1 bis 18.3 mittels mindestens einer Antriebsanordnung 23 antreibbar und bewegbar sein. Die Antriebsanordnung 23 kann beispielsweise je Raumrichtung 7.1 bis 7.3 jeweils einen zugehörigen Linearantrieb 23.1 bis 23.3 umfassen.

Der jeweilige Linearantrieb 23.1 bis 23.3 kann insbesondere eine Linearverstelleinheit 24.1 bis 24.3 und eine zugehörige Antriebseinheit 25.1 bis 25.3, insbesondere einen Motor (nicht näher dargestellt), umfassen. Beispielsweise umfasst die Linearverstelleinheit 24.1 bis 24.3 jeweils die ortsfeste Einheit 13, zum Beispiel eine ortsfeste Basiseinheit oder eine ortsfeste Schiene, und die bewegliche Einheit 14, insbesondere einen Schlitten oder eine bewegliche Schiene. Anstelle von Linearantrieben 23.1 bis 23.3 oder zusätzlich zu diesen können auch andere Antriebsarten mit anderen Verstelleinheiten, insbesondere mehrdimensional bewegbaren Verstelleinheiten, wie zum Beispiel Winkel-Aktuatoren, Drehgelenke oder dergleichen, verwendet werden, die beispielsweise zusätzlich benötigte, rotatorische Bewegungen ausführen.

Dabei ist der jeweilige Motor in nicht näher dargestellter Art und Weise mit der Linearverstelleinheit 24.1 bis 24.3 gekoppelt, um diese entsprechend der zugehörigen Raumrichtung 7.1 bis 7.3 zu bewegen. Je nach Ausführung des Antriebs kann dieser an der ortsfesten Einheit 13 oder der beweglichen Einheit 14 angeordnet sein.

In einer weiteren Ausführungsform ist die jeweilige Schleppkette 18.1 bis 18.3 parallel zur jeweiligen Linearverstelleinheit 24.1 bis 24.3 angeordnet. Beispielsweise ist die jeweilige Schleppkette 18.1 bis 18.3 einerseits an der ortsfesten Einheit 13 und andererseits an der ortsbeweglichen Einheit 14 zur Mitnahme befestigt.

Figur 4 zeigt schematisch die erfindungsgemäße Ladevorrichtung 2, insbesondere die erste Schleppketteneinheit 4.1 und die zugehörige Schleppkette 18.1, in der Endposition 9.2 in Längsrichtung x sowie die zweite Schleppketteneinheit 4.2 und die zugehörige Schleppkette 18.2 in der Endposition 9.4 in Hochrichtung z und die dritte Schleppketteneinheit 4.3 und die zugehörige Schleppkette 18.3 in der Endposition 9.6 in Querrichtung y. Mit anderen Worten: Die jeweilige Schleppkette 18.1 bis 18.3 ist jeweils in ihrer ausgefahrenen Endposition 9.2, 9.4 beziehungsweise 9.6 gezeigt.

In Figur 3 ist die erfindungsgemäße Ladevorrichtung 2, insbesondere die jeweilige Schleppkette 18.1 bis 18.3, in der zugehörigen eingefahrenen Endposition 9.1 bis 9.3 in Längsrichtung x sowie in Querrichtung y und in Hochrichtung z gezeigt.

Figur 5 zeigt schematisch in einer perspektivischen Darstellung ein zweites Ausführungsbeispiel für eine erfindungsgemä-ße Ladevorrichtung 2'.

Die Ladevorrichtung 2' nach Figuren 5 bis 7 unterscheidet sich von der Ladevorrichtung 2 nach Figuren 1 bis 4 darin, dass der Kabelsatz 3 aus einem äußeren flexiblen Kabelabschnitt, der ein schleppkettenfreien außenliegenden Ladekabel 26 umfasst, und aus einem inneren Kabelabschnitt gebildet ist, der Signalleitungen, Versorgungsleitungen, Schutzleitungen, Stromtransportleitungen oder dergleichen führt. Der innere Kabelsatz 3 wird oder ist in der Schleppkettenanordnung 4 geführt.

Die Hilfsleitungen, Signalleitungen und/oder die als Stromtransportleitungen ausgebildeten Ladeübertragungskabel 16 des inneren Kabelabschnitts sind nur teilweise oder abschnittsweise mittels der zuvor beschriebenen Schleppketten 18.1 bis 18.3 der Schleppketteneinheiten 4.1 bis 4.3 geführt und bewegt. Die anderen Leitungen und/oder die Stromtransportleitungen sind beispielsweise, wie zuvor beschrieben, als Litzen, insbesondere Kupferlitzen, ausgebildet.

Die Stromtransportleitungen können in Querschnitt und Umfang an vorgegebene Leistungsanforderungen angepasst werden. Durch eine solche Ausbildung kann der Kabelsatz 3 möglichst kühlfrei und verlustarm mittels der Schleppkettenanordnung 4 geführt werden. Nur der Bereich des außenliegenden Ladekabels 26 mit dem kleineren Querschnitt oder Umfang und der Ladestecker 6 müssen gekühlt werden. Ab welcher Raumrichtung 7.1 bis 7.3 und/oder Stelle das Ladekabel 15 frei und außen geführt wird und entsprechend bis zu welcher Stelle die Führung in Schleppketten 18.1 bis 18.3 und der Einsatz von Stromtransportleitungen erfolgt, kann je nach Anforderungen gewählt werden.

Somit kann der betreffende Übergang 21 von den geführten Ladeübertragungskabeln 16 (= geführte Stromtransportleitungen) zu dem freien Ladekabel 15 flexibel gewählt und den Anforderungen entsprechend angepasst werden. Die Ladevorrichtung 2, insbesondere deren Ladeübertragungskabel 16, kann so für verschiedene Leistungsklassen ausgelegt werden. Das Ladekabel 15, gegebenenfalls teils frei außenliegend, und der Ladestecker 6 können entsprechend der Leistungsklasse gewählt werden.

Beide Ladevorrichtungen 2, 2' können jeweils mit einer Kamera 27 in der Steckerhalterung 8 versehen sein. Die Kamera 27 kann beispielsweise oberhalb des Ladesteckers 6 oder in dessen Bereich angeordnet sein. Die Kamera 27 kann in Richtung eines möglichen Ladeanschlusses 5 für ein zu ladendes Elektrofahrzeug 1 (wie in Figur 1 dargestellt) gerichtet sein.

Dabei kann die Kamera 27 eingerichtet sein, sowohl beim Zuführen des Ladesteckers 6 mittels der zuvor beschriebenen Schleppkettenanordnung 4 in Richtung Ladeanschluss 5 als auch beim Laden und somit im gesteckten Zustand des Ladesteckers 6 im Ladeanschluss 5, den Ladestecker 6, die Kopplung von Ladestecker 6 und Ladeanschluss 5 zu überwachen, insbesondere die Position des Ladeanschlusses 5 aufzufinden, den Ladestecker 6 nachzuverfolgen und/oder eine mögliche Bewegung des Elektrofahrzeugs 1 (dargestellt in Figur 1) nachzuverfolgen.

Figur 6 zeigt schematisch die alternative Ladevorrichtung 2' gemäß Figur 5 in Draufsicht von oben und in der ersten Endposition 9.1, der eingefahrenen Position.

Figur 7 zeigt schematisch die alternative Ladevorrichtung 2' gemäß Figur 5 in einer Seitenansicht mit den Schleppketteneinheiten 4.1 bis 4.3 und der Steckerhalterung 8 und dem außenliegenden Ladekabel 26 zwischen der Steckerhalterung 8 und der dritten Schleppketteneinheit 4.3.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Elektrofahrzeug
- 2, 2': Ladevorrichtung
- 3: Satz von Kabeln (Kabelsatz)
- 4: Schleppkettenanordnung
- 4.1 bis 4.3: Schleppketteneinheit
- 5: Ladeanschluss
- 6: Ladestecker
- 7.1 bis 7.3: Raumrichtung
- 8: Steckerhalterung
- 9.1 bis 9.6: Endposition
- 10.1 bis 10.3: Gehäuse
- 11: Längsausnehmung
- 12: Vertikalausnehmung
- 13: ortsfeste Einheit
- 14: bewegliche Einheit
- 15: Ladekabel
- 16: Ladeübertragungskabel
- 17: Zusatzleitung
- 18.1 bis 18.3: Schleppkette
- 19: Kabelsatzende
- 20: Zugentlastungseinheit
- 21: Übergang
- 22: Kühlleitung
- 23: Antriebsanordnung
- 23.1 bis 23.3: Linearantrieb
- 24.1 bis 24.3: Linearverstelleinheit
- 25.1 bis 25.3: Antriebseinheit
- 26: außenliegendes Ladekabel
- 27: Kamera

- x: Längsrichtung
- y: Querrichtung
- z: Hochrichtung

## Patentansprüche

1. Ladevorrichtung (2, 2') zum Laden eines Elektrofahrzeugs (1) mit elektrischer Energie mittels eines Ladekabels (15, 26), welches mit einem Ladeanschluss (5) an dem zu ladenden Elektrofahrzeug (1) verbindbar ist, **gekennzeichnet durch** eine Schleppkettenanordnung (4), die eingerichtet ist, einen Satz (3) von Kabeln flexibel in Richtung eines Ladeanschlusses (5) in mindestens eine Raumrichtung (7.1 bis 7.3) zu transportieren und in Bezug auf den Ladeanschluss (5) des Elektrofahrzeugs (1) auszurichten.

2. Ladevorrichtung (2, 2') nach Anspruch 1, **dadurch gekennzeichnet, dass** die Schleppkettenanordnung (4) eingerichtet ist, als Satz (3) von Kabeln mindestens ein Ladekabel (15) und/oder ein Ladeübertragungskabel (16) und/oder eine Stromtransportleitung und/oder eine elektrische Zusatzleitung (17) aufzunehmen, zu führen und zu bewegen.

3. Ladevorrichtung (2, 2') nach Anspruch 1 oder 2, **dadurch gekennzeichnet, dass** die Schleppkettenanordnung (4) eingerichtet ist, den Satz (3) von Kabeln in mehrere Raumrichtungen (7.1 bis 7.3) zu führen und zu bewegen.

4. Ladevorrichtung (2, 2') nach Anspruch 1, 2 oder 3, **dadurch gekennzeichnet, dass** die Schleppkettenanordnung (4) zur Führung des Satzes (3) von Kabeln mindestens eine Schleppkette (18.1 bis 18.3) und/oder zur Mitnahme eines Ladesteckers (6) mindestens eine Steckerhalterung (8) umfasst.

5. Ladevorrichtung (2, 2') nach Anspruch 4, **dadurch gekennzeichnet, dass** die Schleppkette (18.1 bis 18.3) mittels mindestens einer Antriebsanordnung (23) bewegbar ist.

6. Ladevorrichtung (2, 2') nach Anspruch 5, **dadurch gekennzeichnet, dass** die Schleppkette (18.1 bis 18.3) parallel zu einer Linearverstelleinheit (24.1 bis 24.3) der Antriebsanordnung (23) angeordnet ist.

7. Ladevorrichtung (2, 2') nach einem der Ansprüche 4 bis 6, **dadurch gekennzeichnet, dass** die Schleppkettenanordnung (4) eingerichtet ist, das Ladekabel (15, 26) und den Ladestecker (6) zu kühlen.

8. Ladevorrichtung (2, 2') nach einem der Ansprüche 4 bis 7, **dadurch gekennzeichnet, dass** die mindestens eine Schleppkette (18.1 bis 18.3) flexibel ausgebildet und umlenkbar ist.

9. Ladevorrichtung (2, 2') nach einem der Ansprüche 4 bis 8, **dadurch gekennzeichnet, dass** die mindestens eine Schleppkette (18.1 bis 18.3) als ein flexibler Hohlprofilträger ausgebildet ist, in welcher der Satz (3) von Kabeln zumindest abschnittsweise aufgenommen ist.

10. Ladevorrichtung (2, 2') nach einem der vorhergehenden Ansprüche,
**dadurch gekennzeichnet, dass** der Satz (3) von Kabeln in einem Übergang (21) zwischen zwei Raumrichtungen (7.1 bis 7.3) schleppkettenfrei geführt ist.

11. Ladevorrichtung (2, 2') nach einem der Ansprüche 2 bis 10,
**dadurch gekennzeichnet, dass** das Ladekabel (15, 26) eine Mehrzahl von Kupferlitzen umfasst.

12. Ladevorrichtung (2, 2') nach Anspruch 11, **dadurch gekennzeichnet, dass** die Kupferlitzen als flexible Einzelleitungen ausgebildet und bauraumoptimiert und/oder je nach Leistungsklasse ausgeführt sind.

13. Ladevorrichtung (2, 2') nach einem der vorhergehenden Ansprüche,
**dadurch gekennzeichnet, dass** der Satz (3) von Kabeln über mindestens ein Zugentlastungselement (20) an mindestens einem Ende der Schleppkette (18.1 bis 18.3) befestigt ist.
